# EUROPEAN PATENT APPLICATION

(11) **EP 2 706 787 A1**
(43) Date of publication of application: **12.03.2014**
(21) Application number: 12810912.1
(22) Date of filing: 09.07.2012
(51) Int. Cl.: H04W 48/08, H04W 88/08

(54) **METHOD AND DEVICE FOR AUTOMATIC DIALLING OF ACCESS POINT**

(30) Priority: 13.07.2011 CN 201110196034
(71) Applicant: Huawei Device Co., Ltd., Shenzhen, Guangdong 518129 (CN)
(72) Inventor: TIAN, Xiaodong, Shenzhen Guangdong 518129 (CN)
(74) Representative: Lord, Michael
(86) International application number: PCT/CN2012/078355
(87) International publication number: WO 2013/007179

(57) **Abstract**

The present invention discloses a method and an apparatus for automatic dialing access point, and relates to the field of communications technologies, which may implement automatic dialing, and improve correctness of acquired APN information. In the solution provided in embodiments of the present invention, APN information corresponding to information in a SIM card is detected, and automatic dialing is performed according to the detected APN information corresponding to the information in the SIM card; APN information corresponding to preset board software is detected, and automatic dialing is performed according to the detected APN information corresponding to the preset board software; and automatic dialing is performed according to preset APN information. The solution provided in the embodiments of the present invention is applicable when automatic dialing access point is performed.

## Description

### TECHNICAL FIELD

The present invention relates to the technical field of communications, and in particular, to a method and an apparatus for automatic dialing access point.

### BACKGROUND

An access point, that is, an APN (Access Point Name), is a parameter which must be configured when a terminal device accesses a network, and determines an access manner in which the terminal device accesses the network. At present, a terminal may perform a data service in two manners, namely, a static APN and a dynamic APN.

When a data service is performed in a manner of static APN dialing, an operator customizes multiple available APNs and store APN information in a terminal file, terminal device software provides a manual selection interface, and when a terminal user manually selects a certain APN, a corresponding GGSN (Gateway GPRS Support Node, gateway GPRS support node) may be obtained to connect to a data network, so as to execute the data service. If the data network is connected successfully, process the data service, if the data network is not connected successfully, manually select another APN to connect to the data network, and if the data network is still not connected successfully, end the operation.

When a data service is performed in a manner of dynamic APN dialing, multiple available APNs correspond to MCCs (Mobile Country Code, mobile country code) or MNCs (Mobile Network Code, mobile network code) of IMSI (International Mobile Subscriber Identification Number, international mobile subscriber identification number) number segments in SIM (Subscriber Identity Module, subscriber identity module) cards, that is to say, SIM cards of different number segments correspond to different APN information. The APN information is stored in a terminal file, and when a terminal user inserts a SIM card, a program in a terminal queries an MCC or MNC message in the SIM card, and automatically obtains, by adapting, an APN message corresponding to the MCC or MNC in the SIM card, so as to obtain a corresponding GGSN to connect to the data network, thereby executing the data service.

With the expansion of operators' business, each operator manages multiple sub-brands, and the sub-brands share a same MCC or MNC; however, the sub-brands may have different service types, and different services also have different APN information; when dialing is performed by using the prior art, available APN information may not be effectively acquired according to the MCC or MNC.

### SUMMARY

Embodiments of the present invention provide a method and an apparatus for automatic dialing access point, which may implement automatic dialing, and improve correctness of acquired APN information.

In order to achieve the foregoing objective, the embodiments of the present invention adopt the following technical solutions:

A method for automatic dialing access point includes:
performing automatic dialing in the following three manners in any sequence, until the dialing succeeds or the dialing still fails after the three manners are all used:
   detecting access point APN information corresponding to information in a subscriber identity module SIM card, and performing automatic dialing according to the detected APN information corresponding to the information in the SIM card;
   detecting APN information corresponding to preset board software, and performing automatic dialing according to the detected APN information corresponding to the preset board software; and
   performing automatic dialing according to APN information preset in client software.

An apparatus for automatic dialing access point includes:
a first dialing unit, configured to detect APN information corresponding to information in a SIM card, and perform automatic dialing according to the detected APN information corresponding to the information in the SIM card;
a second dialing unit, configured to detect APN information corresponding to preset board software, and perform automatic dialing according to the detected APN information corresponding to the preset board software;
a third dialing unit, configured to perform automatic dialing according to APN information preset in client software; and
a control unit, configured to trigger any one of the first dialing unit, the second dialing unit, and the third dialing unit, trigger any one of the other two units when the unit fails in dialing, and when the dialing unit also fails in dialing, trigger the rest dialing unit.

The method and apparatus for automatic dialing access point provided in the embodiments of the present invention can solve a problem that when sub-brands managed by an operator share a same MCC or MNC but do not share APN information due to different service types, available APN information may not be effectively acquired according to the MCC or MNC.

### BRIEF DESCRIPTION OF DRAWINGS

Drawings described herein are provided for further understanding of the present invention, constitute a part of this application, but do not limit the present invention. In the drawings:
FIG. 1 is a flow chart of a method for automatic dialing access point according to Embodiment 1 of the present invention;
FIG. 2 is a block diagram of an apparatus for automatic dialing access point according to Embodiment 1 of the present invention;
FIG. 3 is a flow chart of a method for automatic dialing access point according to Embodiment 2 of the present invention;
FIG. 4 is a flow chart of performing automatic dialing according to APN information corresponding to information in a SIM card according to Embodiment 2 of the present invention;
FIG. 5 is a block diagram of an apparatus for automatic dialing access point according to Embodiment 2 of the present invention; and
FIG. 6 is a block diagram of a first executing unit according to Embodiment 2 of the present invention.

### DESCRIPTION OF EMBODIMENTS

To make the objectives, technical solutions, and advantages of the present invention clearer, the following further describes the present invention in detail with reference to the embodiments and the accompanying drawings. Herein, the exemplary embodiments of the present invention and the description are merely intended to explain the present invention, but are not intended to limit the present invention.

### Embodiment 1

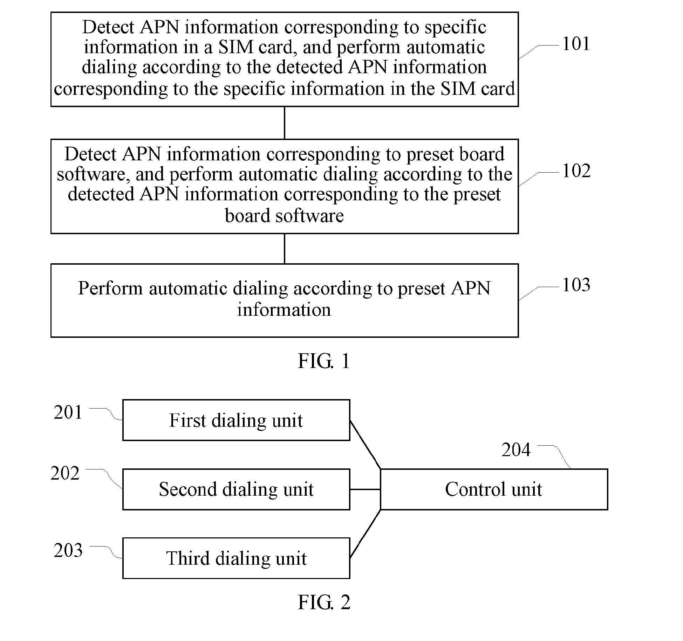

An embodiment of the present invention provides a method for automatic dialing access point, and as shown in FIG. 1, the method includes: performing automatic dialing in three manners in any sequence as described in the following three steps, until the dialing succeeds or the dialing still fails after the three manners are all used:

Step 101: Detect APN information corresponding to information in a SIM card, and perform automatic dialing according to the detected APN information corresponding to the information in the SIM card.

Here, the information in the SIM card includes: an MCC or MNC, a GID (Group Identification, group identification) value, and a network standard with which the SIM card is registered.

The APN information includes: APN information corresponding to the MCC or MNC, APN information corresponding to the GID, and APN information corresponding to the network standard, where, the APN information is stored in the SIM card according to a combination sequence of the information in the SIM card, or stored in client software.

Step 102: Detect APN information corresponding to preset board software, and perform automatic dialing according to the detected APN information corresponding to the preset board software.

The preset board software is software directly performing interaction with hardware. The APN information corresponding to the preset board software mainly depends on APN information corresponding to a parameter written in the preset board software. An operator pre-configures APN information in board software of a product, and client software acquires the APN information by sending an AT command, and performs automatic dialing.

Step 103: Perform automatic dialing according to APN information preset in client software.

In the method for automatic dialing access point provided in the embodiment of the present invention, automatic dialing is performed in three manners: detecting APN information corresponding to information in a SIM card, and performing automatic dialing according to the detected APN information corresponding to the information in the SIM card; detecting APN information corresponding to preset board software, and performing automatic dialing according to the detected APN information corresponding to the preset board software; and performing automatic dialing according to APN information preset in client software.

Compared with the prior art, a problem that when sub-brands managed by an operator share the same MCC or MNC but do not share APN information due to different service types, available APN information may not be effectively acquired according to the MCC or MNC can be solved.

An embodiment of the present invention provides an apparatus for automatic dialing access point, and as shown in FIG. 2, the apparatus includes: a first dialing unit 201, a second dialing unit 202, a third dialing unit 203, and a control unit 204.

The first dialing unit 201 is configured to detect APN information corresponding to information in a SIM card, and perform automatic dialing according to the detected APN information corresponding to the information in the SIM card.

The second dialing unit 202 is configured to detect APN information corresponding to preset board software, and perform automatic dialing according to the detected APN information corresponding to the preset board software.

The third dialing unit 203 is configured to perform automatic dialing according to APN information preset in client software.

The control unit 204 is configured to trigger any one of the first dialing unit 201, the second dialing unit 202, and the third dialing unit 203, trigger any one of the other two units when the unit fails in dialing, and when the dialing unit also fails in dialing, trigger the rest dialing unit.

Preferably, the control unit may trigger the three dialing units according to a sequence being the first dialing unit 201, the second dialing unit 202, and the third dialing unit 203. Optionally, if the three dialing units all fail in dialing, the control unit further sends a prompt of dialing failure.

Compared with the prior art, the apparatus for automatic dialing access point provided in the embodiment of the present invention can solve a problem that when sub-brands managed by an operator share a same MCC or MNC but do not share APN information due to different service types, available APN information may not be effectively acquired according to the MCC or MNC.

### Embodiment 2

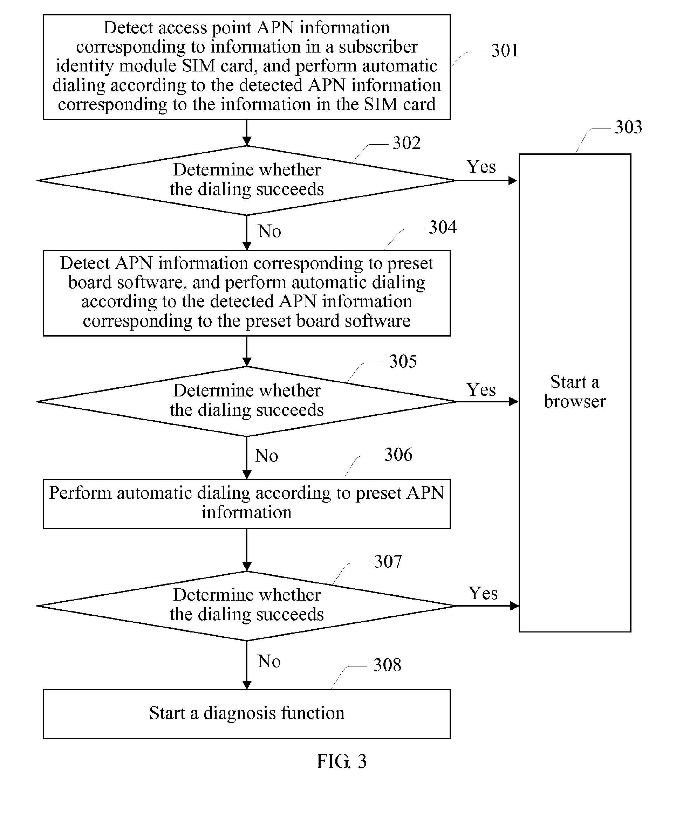

An embodiment of the present invention provides a method for automatic dialing access point, and as shown in FIG. 3, the method includes:

In the solution provided in the embodiment of the present invention, automatic dialing may be performed in the following three manners: performing automatic dialing according to APN information corresponding to information in a SIM card, performing automatic dialing according to APN information corresponding to preset board software, and performing automatic dialing according to APN information preset in client software; the three automatic dialing manners may be randomly ordered and randomly combined. In the present invention, a detailed description is given in a sequence that automatic dialing is performed first according to APN information corresponding to information in a SIM card, automatic dialing is performed according to APN information corresponding to preset board software, and then automatic dialing is performed according to APN information preset in client software.

Step 301: Detect access point APN information corresponding to information in a subscriber identity module SIM card, and perform automatic dialing according to the detected APN information corresponding to the information in the SIM card.

The information in the SIM card includes: a mobile country code MCC/mobile network code MNC, a group identification GID value, and a network standard with which the SIM card is registered.

An APN (Access Point Name, access point) is a parameter which must be configured when a terminal device accesses a network, and determines an access manner in which the terminal device accesses the network.

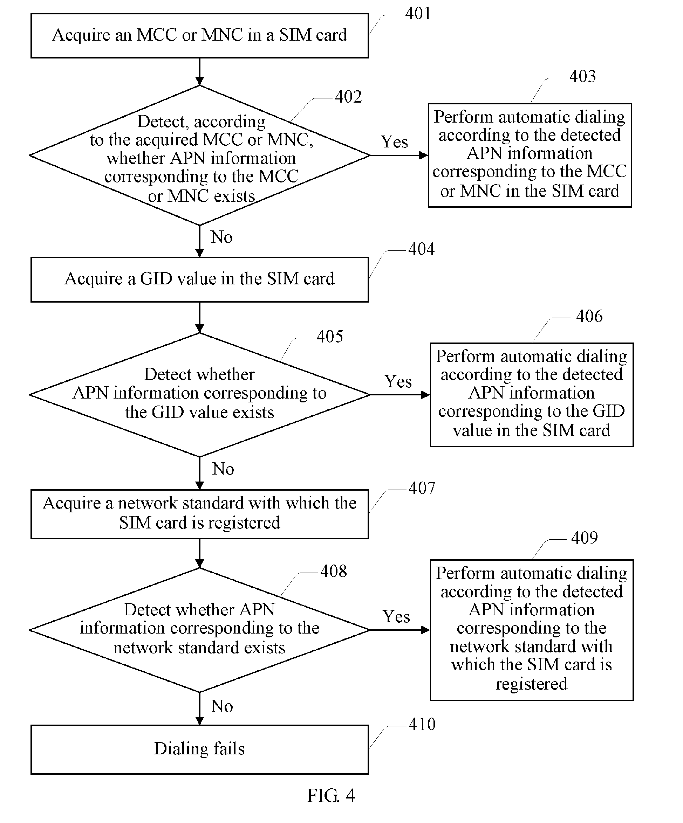

Specifically, as shown in FIG. 4, an implementation manner of step 301 is as follows:

It should be noted that, the APN information corresponding to the information in the SIM card is preset according to a combination of APN information corresponding to an MCC/MNC, APN information corresponding to a group identification GID value, and APN information corresponding to a network standard with which the SIM card is registered; further, a combination manner of the APN information corresponding to the information in the SIM card may be APN information corresponding to an MCC/MNC, APN information corresponding to a network standard with which the SIM card is registered, and APN information corresponding to a group identification GID value; or
APN information corresponding to a group identification GID value, APN information corresponding to an MCC/MNC, and APN information corresponding to a network standard with which the SIM card is registered; or
APN information corresponding to a group identification GID value, APN information corresponding to a network standard with which the SIM card is registered, and APN information corresponding to an MCC/MNC; or
APN information corresponding to a network standard with which the SIM card is registered, APN information corresponding to an MCC/MNC, and APN information corresponding to a group identification GID value; or APN information corresponding to a network standard with which the SIM card is registered, APN information corresponding to a group identification GID value, and APN information corresponding to an MCC/MNC; and
the APN information is preset according to any combination sequence of APN information as described in the foregoing, and automatic dialing may be performed according to the APN information corresponding to specific information. The APN information is stored in a file of the SIM card, or stored in client software, and then an AT (Attention) command is sent by the client software to query corresponding APN information.

Preferably, the APN information corresponding to the MCC/MNC and the APN information corresponding to the information in the GID have a strongest association, the network standard varies correspondingly according to a network registration situation. Therefore, in an exemplary solution of the embodiment of the present invention, dialing according to the APN information corresponding to the information in the SIM card is described in detail according to such a combination of APN information corresponding to an MCC/MNC, APN information corresponding to a group identification GID value, and APN information corresponding to a network standard with which the SIM card is registered.

Step 401: Acquire an MCC or MNC in the SIM card.

MCC (Mobile Country Code) is a mobile country code, MCC resources are uniformly allocated and managed by the International Telecommunication Union (ITU), the MCC uniquely identifies a country to which a mobile user belongs, and has a total of 3 digits, and the MCC of China is 460.

MNC (Mobile Network Code) is a mobile network code, the MNC has a total of 2 digits, a GSM system of China Mobile uses 00 and 02, a GSM system of China Unicom uses 01, a CDMA system of China Telecom uses 03, and a TD system of China Mobile uses 07.

Specifically, the client software queries the MCC or MNC by sending an AT (Attention) command.

Step 402: Detect, according to the acquired MCC or MNC, whether APN information corresponding to the MCC or MNC exists.

Specifically, according to the acquired MCC or MNC in the SIM card, it may acquire, in the file of the SIM card or the client software, whether APN information corresponding to the MCC or MNC exists.

Step 403: If APN information corresponding to the MCC or MNC exists, perform automatic dialing according to the detected APN information corresponding to the MCC or MNC in the SIM card.

Step 404: If no APN information corresponding to the MCC or MNC exists, acquire a GID value in the SIM card.

If no APN information corresponding to the MCC or MNC exists, in this case, dialing needs to be performed in another manner.

GID (Group Identification, group identification) refers to an identity of a user of a shared resource system, is a common graphical user interface having strong adaptability and a friendly user interface, which is used for geometrical simulation, data input, model transformation, grid and a visualization result, and is applicable to all types of numerical simulation packets. SIM cards of some GIDs specially represent users having specific functions, for example, a type of users with a GID being A may be free in short messages, a type of users with a GID being A may be free in multimedia messages, and in this way, an operator may set APN information according to the GID.

Specifically, the client software acquires a GID value in the SIM card file by sending an AT command.

Step 405: Detect, according to the acquired GID value, whether APN information corresponding to the GID value exists.

According to the acquired GID value, query the file of the SIM card or the client software to determine whether APN information corresponding to the GID value exists.

Step 406: If APN information corresponding to the GID value exists, perform automatic dialing according to the detected APN information corresponding to the GID value in the SIM card.

Step 407: If no APN information corresponding to the GID value exists, acquire a network standard with which the SIM card is registered.

The network standard is a type of network, and frequency bands commonly used by mobile phones in China mainly include a CDMA1X, 800 MHz frequency band occupied by CDMA mobile phones, a 900/1800/1900 MHz frequency band occupied by GSM mobile phones; a 900/1800 MHz frequency band occupied by GSM1X dual-mode; and a 900/1800/1900/2100 MHz frequency band occupied by 3G.

Step 408: Detect, according to the acquired network standard, whether APN information corresponding to the network standard exists.

Step 409: If APN information corresponding to the network standard exists, perform automatic dialing according to the detected APN information corresponding to the network standard with which the SIM card is registered.

Step 410: If no APN information corresponding to the network standard exists, dialing fails.

If no APN information corresponding to the network standard exists, a manner of performing automatic dialing according to the APN information corresponding to the information in the SIM card fails, and automatic dialing needs to be performed in another manner.

Continuously referring to step 302 in FIG. 3, determine whether the dialing succeeds.

Step 303: If the dialing succeeds, start a browser.

Step 304: When the dialing fails, detect APN information corresponding to preset board software, and perform automatic dialing according to the detected APN information corresponding to the preset board software.

A board generally refers to a circuit board, and specifically may be a PCB board. The preset board software is software directly performing interaction with hardware, and the APN information corresponding to the preset board software mainly depends on APN information corresponding to a parameter written in the preset board software. A product provider pre-configures APN information of a user in preset board software, and client software acquires the APN information by sending an AT command, and performs dialing according to the detected APN information corresponding to the preset board software.

Step 305: Determine whether the dialing succeeds.

If the dialing succeeds, turn to step 303 to start the browser and perform data processing.

Step 306: When the previous dialing fails, perform automatic dialing according to APN information preset in the client software.

It should be noted that, after being installed, a client stores preset APN information to a PC, and the client software reads the APN information from a configuration file on the PC, and performs automatic dialing.

Step 307: Determine whether the dialing succeeds.

If the dialing succeeds, turn to step 303 to start the browser and perform data processing.

Step 308: When the dialing fails, start a diagnosis function.

It should be noted that, when the automatic dialing fails, manual dialing may be performed according to the APN information set by the user, the client software provides an interface for creating APN, and the APN information is acquired from the operator.

If all dialing manners fail, the client software diagnoses information such as signal strength, whether hardware is damaged, and whether the SIM card is damaged, so as to illustrate that the dialing fails.

It should be noted that, in the solution provided in the embodiment of the present invention, a sequence of the three manners of performing automatic dialing is not strictly fixed, and the three manners of automatic dialing, namely, performing automatic dialing according to APN information corresponding to information in a SIM card, performing automatic dialing according to APN information corresponding to preset board software, and performing automatic dialing according to APN information preset in client software, may be randomly ordered and randomly combined.

In the method for automatic dialing access point provided in the embodiment of the present invention, automatic dialing is performed according to the provided three manners, and compared with the prior art, the method can solve a problem that when sub-brands managed by an operator share the same MCC or MNC but do not share APN information due to different service types, available APN information may not be effectively acquired according to the MCC or MNC.

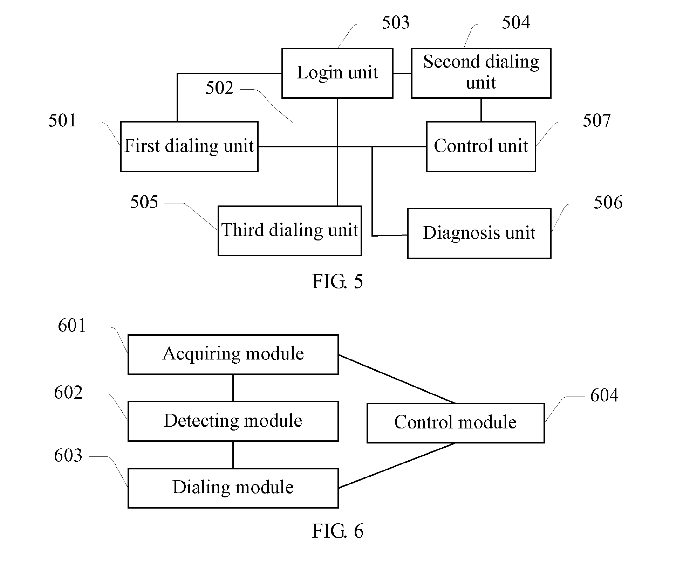

An embodiment of the present invention provides an apparatus for automatic dialing access point, and as shown in FIG. 5, the apparatus includes: a first dialing unit 501, a determining unit 502, a login unit 503, a second dialing unit 504, a third dialing unit 505, a diagnosis starting unit 506, and a control unit 507.

The first dialing unit 501 is configured to detect APN information corresponding to information in a SIM card, and perform automatic dialing according to the detected APN information corresponding to the information in the SIM card.

The information in the SIM card includes: a mobile country code MCC/mobile network code MNC, a group identification GID value, and a network standard with which the SIM card is registered.

The login unit 503 is configured to: if the dialing succeeds, start a browser and perform data processing.

The control unit 507 is configured to trigger any one of the first dialing unit 201, the second dialing unit 202, and the third dialing unit 203, trigger any one of the other two units when the unit fails in dialing, and when the dialing unit also fails in dialing, trigger the rest dialing unit.

The second dialing unit 504 is configured to detect APN information corresponding to preset board software, and perform automatic dialing according to the detected APN information corresponding to the preset board software.

A board generally refers to a circuit board, and specifically may be a PCB board. The preset board software is software directly performing interaction with hardware, and the APN information corresponding to the preset board software mainly depends on APN information corresponding to a parameter written in the preset board software. A product provider pre-configures APN information of a user in preset board software, and client software acquires the APN information by sending an AT command, and performs dialing according to the detected APN information corresponding to the preset board software.

The third dialing unit 505 is configured to perform automatic dialing according to APN information preset in client software.

The control unit 507 is further configured to: if the three dialing units all fail in dialing, further send a prompt of dialing failure. The diagnosis unit 506 is configured to start a diagnosis function when the control unit 507 prompts dialing failure.

It should be noted that, when the automatic dialing fails, manual dialing may be performed according to the APN information set by the user, the client software provides an interface for creating APN, and the APN information is acquired from the operator.

If all dialing manners fail, the client software diagnoses information such as signal strength, whether hardware is damaged, and whether the SIM card is damaged, so as to illustrate that the dialing fails.

It should be noted that, in the apparatus for performing automatic dialing in the solution provided in the embodiment of the present invention, a sequence of execution of the first dialing unit, the second dialing unit and the third dialing unit in the apparatus is not strictly fixed, and the sequence of performing automatic dialing of the three units may be randomly ordered and randomly combined. Preferably, the control unit may trigger the three dialing units according to a sequence being the first dialing unit, the second dialing unit, and the third dialing unit.

Specifically, as shown in FIG. 6, the first dialing unit 501 includes: an acquiring module 601, a detecting module 602, a dialing module 603, and a control module 604.

The acquiring module 601 is configured to acquire an MCC or MNC in a SIM card.

MCC (Mobile Country Code) is a mobile country code, MCC resources are uniformly allocated and managed by the International Telecommunication Union (ITU), the MCC uniquely identifies a country to which a mobile user belongs, and has a total of 3 digits, and the MCC of China is 460.

MNC (Mobile Network Code) is a mobile network code, the MNC has a total of 2 digits, a GSM system of China Mobile uses 00 and 02, a GSM system of China Unicom uses 01, a CDMA system of China Telecom uses 03, and a TD system of China Mobile uses 07.

The detecting module 602 is configured to detect, according to the acquired MCC or MNC, whether APN information corresponding to the MCC or MNC exists.

After acquiring the MCC or MNC, query a file in the SIM card to determine whether APN information corresponding to the MCC or MNC exists.

The dialing module 603 is configured to: if APN information corresponding to the MCC or MNC exists, perform automatic dialing according to the detected APN information corresponding to the MCC or MNC in the SIM card.

The acquiring module 601 is further configured to acquire the GID value in the SIM card.

GID refers to an identity of a user of a shared resource system, is a common graphical user interface having strong adaptability and a friendly user interface, which is used for geometrical simulation, data input, model transformation, grid and a visualization result, and is applicable to all types of numerical simulation packets. SIM cards of some GIDs specially represent users having specific functions, for example, a type of users with a GID being A may be free in short messages, a type of users with a GID being A may be free in multimedia messages, and in this way, an operator may set APN information according to the GID.

The detecting module 602 is further configured to detect, according to the acquired GID value, whether APN information corresponding to the GID value exists.

The dialing module 603 is further configured to: if APN information corresponding to the GID value exists, perform automatic dialing according to the detected APN information corresponding to the GID value in the SIM card.

The acquiring module 601 is further configured to acquire a network standard with which the SIM card is registered.

The network standard is a type of network, and frequency bands commonly used by mobile phones in China mainly include a CDMA1X, 800 MHz frequency band occupied by CDMA mobile phones, a 900/1800/1900 MHz frequency band occupied by GSM mobile phones; a 900/1800 MHz frequency band occupied by GSM1X dual-mode; and a 900/1800/1900/2100 MHz frequency band occupied by 3G.

The detecting module 602 is further configured to detect, according to the acquired network standard, whether APN information corresponding to the network standard exists.

The dialing module 603 is further configured to: if APN information corresponding to the network standard exists, perform automatic dialing according to the detected APN information corresponding to the network standard with which the SIM card is registered.

The control module 604 is configured to control the acquiring module 601 to acquire any one of three types of information including the MCC or MNC in the SIM card, the GID in the SIM card, and the network standard with which the SIM card is registered, when the dialing module 603 fails in dialing, trigger the acquiring module 601 to acquire any one of the other two types of information, and when the dialing module 603 fails in dialing again, trigger the acquiring module 601 to acquire the rest one type of information.

It should be noted that, the APN information is preset according to such as a combination of APN information corresponding to an MCC/MNC, APN information corresponding to a group identification GID value, and APN information corresponding to a network standard with which the SIM card is registered, where, the sequence of the APN information corresponding to an MCC/MNC, the APN information corresponding to a group identification GID value, and the APN information corresponding to a network standard with which the SIM card is registered is not strictly fixed, and they can be randomly combined. The APN information is stored in the SIM card.

Compared with the prior art, the apparatus for automatic dialing access point provided in the embodiment of the present invention can solve a problem that when sub-brands managed by an operator share a same MCC or MNC but do not share APN information due to different service types, available APN information may not be effectively acquired according to the MCC or MNC.

Through the foregoing description of the implementation manners, a person skilled in the art can clearly understand that the present invention can be implemented in a manner of software plus a necessary universal hardware platform, and certainly, may also be implemented by hardware; however, in most cases, the former is a preferred implementation manner. Based on such understanding, the technical solution of the present invention or the part that makes contributions to the prior art can be substantially embodied in a form of a software product. The computer software product may be stored in a readable storage medium such as a floppy disk, a hard disk or an optical disc, and includes several instructions used to instruct a computer device (which may be a personal computer, a server, a network device, or the like) to perform the method according to each embodiment of the present invention.

The foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions recorded in the foregoing embodiments or make equivalent replacements to part of technical features of the technical solutions recorded in the foregoing embodiments; however, these modifications or replacements do not make the essence of the corresponding technical solutions depart from the scope of the technical solutions of the embodiments of the present invention.

## Claims

1. A method for automatic dialing access point, comprising:
performing automatic dialing in the following three manners in any sequence, until the dialing succeeds or the dialing still fails after the three manners are all used:
detecting access point APN information corresponding to information in a subscriber identity module SIM card, and performing automatic dialing according to the detected APN information corresponding to the information in the SIM card;
detecting APN information corresponding to preset board software, and performing automatic dialing according to the detected APN information corresponding to the preset board software; and
performing automatic dialing according to APN information preset in client software.

2. The method for automatic dialing access point according to claim 1, wherein the information in the SIM card comprises: a mobile country code MCC/mobile network code MNC, a group identification GID value, and a network standard with which the SIM card is registered.

3. The method for automatic dialing access point according to claim 2, wherein the detecting APN information corresponding to information in a SIM card, and performing automatic dialing according to the detected APN information corresponding to the information in the SIM card comprises:
performing automatic dialing in the following three manners in any sequence, until the dialing succeeds or the dialing still fails after the three manners are all used:
acquiring the MCC or MNC in the SIM card; detecting APN information corresponding to the MCC or MNC according to the acquired MCC or MNC; and performing automatic dialing according to the detected APN information corresponding to the MCC or MNC in the SIM card;
acquiring the GID value in the SIM card; detecting APN information corresponding to the GID value according to the acquired GID value; and performing automatic dialing according to the detected APN information corresponding to the GID value in the SIM card; and
acquiring the network standard with which the SIM card is registered; detecting APN information corresponding to the network standard according to the acquired network standard; and performing automatic dialing according to the detected APN information corresponding to the network standard with which the SIM card is registered.

4. The method for automatic dialing access point according to claim 3, wherein the APN information is stored in the SIM card according to a combination sequence of the information in the SIM card, or is stored in the client software.

5. The method for automatic dialing access point according to claim 1, further comprising:
if the dialing succeeds, starting a browser.

6. An apparatus for automatic dialing access point, comprising:
a first dialing unit, configured to detect APN information corresponding to information in a SIM card, and perform automatic dialing according to the detected APN information corresponding to the information in the SIM card;
a second dialing unit, configured to detect APN information corresponding to preset board software, and perform automatic dialing according to the detected APN information corresponding to the preset board software;
a third dialing unit, configured to perform automatic dialing according to APN information preset in client software; and
a control unit, configured to trigger any one of the first dialing unit, the second dialing unit, and the third dialing unit, trigger any one of the other two units when the unit fails in dialing, and when the dialing unit also fails in dialing, trigger the rest dialing unit.

7. The apparatus for automatic dialing access point according to claim 6, wherein an execution sequence of each group of modules in the following first executing unit is not limited, each group of modules comprises an acquiring module, a detecting module, and a dialing module, and the first executing unit comprises:
an acquiring module, configured to acquire an MCC or MNC in the SIM card; a detecting module, configured to detect APN information corresponding to the MCC or MNC according to the acquired MCC or MNC; and a dialing module, configured to perform automatic dialing according to the detected APN information corresponding to the MCC or MNC in the SIM card, wherein
the acquiring module is further configured to acquire a GID value in the SIM card; the detecting module is further configured to detect APN information corresponding to the GID value according to the acquired GID value; and the dialing module is further configured to perform automatic dialing according to the detected APN information corresponding to the GID value in the SIM card; and
the acquiring module is further configured to acquire a network standard with which the SIM card is registered; the detecting module is further configured to detect APN information corresponding to the network standard according to the acquired network standard; and the dialing module is further configured to perform automatic dialing according to the detected APN information corresponding to the network standard with which the SIM card is registered; and
a control module, configured to control the acquiring module to acquire any one of three types of information comprising the MCC or MNC in the SIM card, the GID in the SIM card, and the network standard with which the SIM card is registered, when the dialing module fails in dialing, trigger the acquiring module to acquire any one of the other two types of information, and when the dialing module fails in dialing again, trigger the acquiring module to acquire the rest one type of information.

8. The apparatus for automatic dialing access point according to claim 7, wherein the APN information is stored in the SIM card according to a combination sequence of the information in the SIM card, or is stored in the client software.

9. The apparatus for automatic dialing access point according to claim 6, further comprising:
a login unit, configured to start a browser if the dialing succeeds.
